# EUROPÄISCHE PATENTSCHRIFT

(11) **EP 1 799 008 B1**
(45) Veröffentlichungstag und Bekanntmachung des Hinweises auf die Patenterteilung: **14.05.2014**
(21) Anmeldenummer: 06122496.0
(22) Anmeldetag: 18.10.2006
(51) Int. Cl.: H04L 12/70

(54) **Breitband-Kommunikationssystem**
Broadband communication system
Système de communication large bande

(30) Priorität: 16.12.2005 DE 102005060380
(43) Veröffentlichungstag der Anmeldung: 20.06.2007
(73) Patentinhaber: Aeromaritime Systembau GmbH, 85375 München (DE)
(72) Erfinder: Biel, Gerd, 09241 Mühlau (DE); Pietzner, Lutz, 09648 Mittweida (DE); Meyer, Uwe, 09114 Chemnitz (DE)
(74) Vertreter: Vogeser, Werner

(56) Entgegenhaltungen:
- EP-A- 1 116 630
- WO-A-02/21837
- WO-A-2004/105292
- US-A- 5 930 238

## Beschreibung

### I. Anwendungsgebiet

Die Erfindung betrifft ein Breitband-Kommunikationssystem sowie ein Verfahren zu dessen Betrieb.

### II. Technischer Hintergrund

Ein solches Kommunikationssystem soll eine digitale Kommunikations-Infrastruktur bereitstellen, welche in der Praxis meist auf einen bestimmten Kommunikationsdienst (Sprachübertragung, Datenübertragung, letzteres insbesondere für Fernüberwachung oder Fernsteuerung) ausgelegt ist. Dementsprechend sind sowohl die Handlingfunktionen als auch die Art und der Umfang der Übertragungswege entsprechend diesen Haupt-Nutzungen ausgelegt.

Ein solches Kommunikationssystem is zum Beispiel offenbart im Dokument WO 02/21837 A.

Deshalb entstehen Probleme immer dann bzw. wird der Aufwand immer dann stark erhöht, wenn derartige vorhandene spezifizierte Kommunikationssysteme mit anderen spezifizierten Kommunikationssystemen gekoppelt werden sollen, besonders wenn die zu koppelnden Kommunikationssysteme unterschiedliche Anforderungen hinsichtlich Verfügbarkeit, Datenformat, Datenmenge, Manipulationssicherheit und dergleichen aufweisen.

Insbesondere wurde bei bisherigen solchen Kommunikationssystemen ein breitbandiges Analogsignal nicht in das Kommunikationsnetzwerk eingegeben, sondern parallel zu diesem Kommunikationsnetzwerk übertragen, um die bei einer Digitalisierung sich ergebende hohe Dichte an digitalen Daten und deren zeitaktuelle Übertragung zu vermeiden.

### III. Darstellung der Erfindung

### a) Technische Aufgabe

Es ist daher die Aufgabe gemäß der Erfindung, ein Dienste-neutrales, insbesondere modular aufgebautes, Kommunikationssystem sowie ein Verfahren zu dessen Betrieb zu schaffen, welches an die Anforderungen unterschiedlichster Aufgaben mit geringem Aufwand angepasst werden kann.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

Durch die Möglichkeit sehr breitbandige und hochdynamische analoge Signale zu digitalisieren, kann in der Praxis jede Art von vorkommenden Signalen digitalisiert und damit in der Folge in einem Netzwerk vermittlungsfähig gemacht werden.

Die Umwandlung der Signale im Terminaladapter in das PCM-Format ist der erste Schritt der Zusammenfassung und ermöglicht die spätere zeitliche Verdichtung, die anschließend im einzelnen Knoten notwendig ist, um die Daten über den knoteninternen H.110-Bus transportieren zu können.

Die die Verschaltung mit anderen Teilnehmern steuernde Switching & Conferencing-Einheit muss logischerweise in jedem der einzelnen Knoten vorhanden sein.

Auch die Vermittlung an Terminals, die an ein und dem gleichen Knoten und sogar ein und derselben Terminaladapter-Unit (TAU) hängen, erfolgt ebenfalls über die Switching & Conferencing-Einheit (SWAC).

In jedem Knoten übernimmt der Network-Interface-Manager (NIM) die Verbindung über das Netzwerk zu den anderen Knoten (im ATM-Format), während knoteninterne Verbindungen von der Switching & Conferencing-Einheit allein realisiert werden.

Durch die Erstellung der Ablaufregeln auf dem Server und einer Hinterlegung dieser Regeln auf jedem einzelnen Knoten, dort in den Network-Interface-Manager, ist das Netzwerk auch bei einem Absturz des Servers funktionsfähig.

Lediglich Neukonfigurationen können ohne Server nicht durchgeführt werden.

Ein Ausloggen und Einloggen eines Benutzers an einem anderen Terminal ist dagegen nach wie vor möglich, ebenso ein Austausch eines Terminals gegen ein anderes Terminal der gleichen Art.

Durch die Anbindung jedes Terminaladapters an zwei Netzwerkknoten wird die Ausfallsicherheit des Netzwerks erhöht.

Die Anbindung von mehreren einkanaligen Terminals an nur einem Terminal-adapter reduziert die Anzahl der notwendigen Terminaladapter und ist möglich durch die ausreichende Anzahl von Kanälen, z. B. je 30 Kanäle pro Terminal-adapter.

Die zusätzlich zum ATM-Ringbus geführte Ethernet-Verbindung zwischen den einzelnen Knoten dient der Übertragung von Steuerdaten zwischen den einzelnen Knoten und damit der Konfigurierung der Endgeräte, so dass dieser Steuerungsaufwand getrennt von der Nutzlast, die über den ATM-Bus übertragen wird, geführt ist, was die Ausfallsicherheit des Systems verbessert.

Zusätzlich kann die Ethernet-Verbindung auch für weitere Dienste benutzt werden, z. B. für Voice-over-IP anstelle der normalen ISDN-Telefonverbindung, die über den ATM-Bus laufen würde.

Durch die einheitliche Ausbildung der Terminaladapter, also insbesondere einheitliche Schnittstellen nach dem E1-Standard zur Verbindung mit den einzelnen Netzwerkknoten einerseits und einheitliche Ethernet-Schnittstelle andererseits, wird die Verkabelung vereinfacht und für alle Terminaladapter egalisiert.

Die Ethernet -Verbindung wird darüber hinaus von den Terminaladaptern bis zu den Endgeräten weitergeführt, die darüber konfiguriert werden sollen. In einfache Endgeräte, beispielsweise nur Sprechstellen, werden die Terminaladapter direkt integriert zur Verringerung der Baugröße und Verringerung des Verkabelungsaufwandes.

Die Spezifizierung der Terminaladapter dient prinzipiell dazu, um die jeweils spezifische Signalart möglichst effizient zu übertragen. Die Reduzierung auf nur wenige Terminal-Adapter-Arten reduziert Fertigungsaufwand, Vorratshaltung und ermöglicht die verbesserte Austauschbarkeit.

Je nach Anforderungsprofil enthalten die einzelnen Terminaladapter damit mehr oder weniger serielle Schnittstellen, Breitband-Audio-Schnittstellen und Sprachschnittstellen, da die zur Verfügung stehenden Zeitschlitze begrenzt sind und für den jeweiligen Anwendungsfall optimal genutzt werden sollen.

Zwischen den Knoten wird die Nutzlast im ATM-Standard übertragen, da es sich hierbei um eine deterministische Punkt-zu-Punkt Übertragung mit einer sichergestellten Mindestqualität der Übertragung handelt.

Wenn die ATM-Ringbus-Leitung an einer Stelle unterbrochen ist, stellt der ATM-Standard sicher, dass durch Wechsel der Transportrichtung in der Busleitung alle anderen Knoten dennoch erreichbar bleiben.

Körperlich doppelt vorhandene Leitungen im ATM-Bus erhöhen einerseits die Ausfallsicherheit und dienen auf der anderen Seite der Hin- und Rückführung von Signalen, falls die Ringleitung an einer Stelle unterbrochen ist.

Die parallel vorhandenen Ethernet-Schnittstellen stellen ein separates LAN dar, welches auch nach einem anderen Standard betrieben werden könnte.

Durch die frei konfigurierbaren Funktionselemente bei den Terminals, insbesondere bei den Voice & Control-Terminals (VCT's), können im Server Benutzerprofile hinterlegt werden, so dass unabhängig von dem Ort und damit Terminal, an dem sich ein Benutzer einloggt, dessen Nutzerprofil geladen wird.

Davon abhängig erscheinen beispielsweise bestimmte festgelegte, z. B. virtuelle, Auswahltasten auf dem z. B. berührungsempfindlichen Bildschirm des Terminals, die nur für diesen einen Benutzer in dieser Art definiert sind.

Die strikte Trennung von roten und schwarzen Datenwegen, also geheimhaltungsbedürftigen und nicht geheimhaltungsbedürftigen Daten, dient dazu, das Abgeben von geheimhaltungsbedürftigen Daten nach außerhalb des Kommunikationsnetzwerkes zuverlässig zu verhindern.

Trotz Benutzung der gleichen körperlichen Leitungen kann dies beim Zeitmultiplexverfahren sichergestellt werden durch Benutzung zeitlich fest voneinander getrennter roter und schwarzer Zeitschlitz.

Der Vermeidung der Vermischung beider Signalarten dient auch eine durch Hardware getrennte Vermittlung, indem über einen Hardwarefilter sichergestellt wird, dass rote Daten nur auf rote Datenwege bzw. Zeitschlitze vermittelt werden und ebenso schwarze Daten nur auf schwarzer Datenwege bzw. Zeitschlitze.

Die Aufteilung der Signale auf die einzelnen Kanäle innerhalb der Terminaladapter ist für die einzelnen Arten der Terminaladapter nach Kanälen festgelegt.

So ist beispielsweise ein Terminaladapter-Data mit einem daranhängenden Chiffriergerät so belegt, dass
- die Kanäle 2 bis 14 für die Nutzlast schwarzer Signale,
- Kanal 15 für die Steuersignale der schwarzen Signale,
- Kanäle 18 bis 30 für die Nutzlast roter Signale
   benutzt werden.

Im Gegensatz dazu sieht beispielsweise die Belegung des gleichen Terminal-adapter-Data bei einem daranhängenden Datenmodem ganz anders aus:
- Kanäle 2 bis 14: Nutzlast schwarze Signale und
- Kanal 1: Audiosignal zum Sender,
- Kanäle 17 bis 31: frei

Indem bei Konferenzschaltungen jeder Teilnehmer alle anderen Teilnehmer hören soll, außer sich selbst, können echte Konferenzen und damit in der Praxis auch Konferenzen mit einer relativ großen Teilnehmeranzahl durchgeführt werden, bevor die Übersichtlichkeit unter den Teilnehmern verloren geht.

Indem bei der Rot-Schwarz-Trennung der Filter als Hardware realisiert ist, sind Überschneidungen, insbesondere bewusste Manipulationen bei der Unterscheidung zwischen roten und schwarzen Signalen, ausgeschlossen.

### c) Ausführungsbeispiele

Ausführungsformen gemäß der Erfindung sind im Folgenden beispielhaft näher beschrieben. Es zeigen:
- Fig. 1:: die Systemübersicht des Kommunikationsnetzwerkes,
- Fig. 2:: das Blockschaltbild,
- Fig. 3:: den Konferenzblock und
- Fig. 4:: den Rot/Schwarz-Selektor.

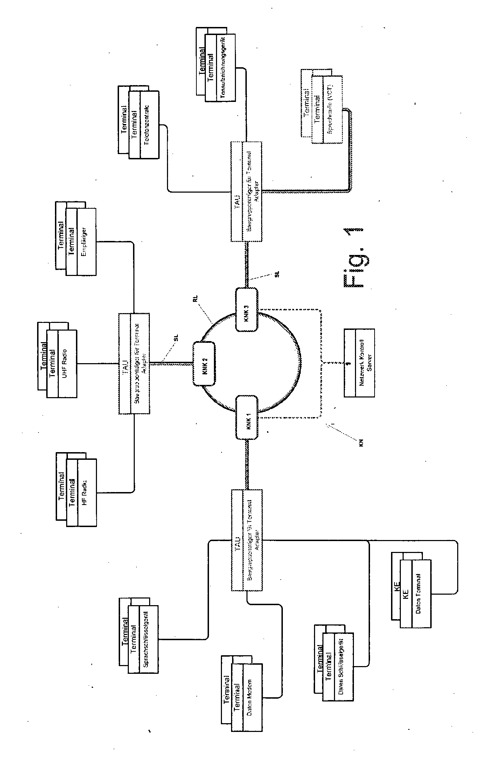

Anhand der Systemübersicht gemäß Fig. 1 wird zunächst die Problemstellung klar:

Eine Vielzahl miteinander verbundener Kommunikationsendgeräte (KE), die hinsichtlich Art (digital oder analog) als auch des Formates ganz unterschiedliche Daten abgeben bzw. benötigen, sollen mit jedem beliebigen oder auch mehreren Kommunikationsendgeräten gleichzeitig kommunizieren können. Dabei soll der Aufwand für Bau, Wartung und Reparatur möglichst gering gehalten werden und die Störanfälligkeit so niedrig wie möglich sein. Auch soll ein Ausfall einzelner Komponenten die Kommunikation unter den verbleibenden Komponenten möglichst wenig beeinträchtigen.

Das Rückgrat des Kommunikationsnetzwerkes (KN) ist der hier als Ringleitung (RL) dargestellte Backbone, der die einzelnen Netzwerkknoten (KNK1, KNK2, ...) miteinander verbindet. Das gesamte Kommunikationsnetzwerk (KN) wird über mindestens einen Server (1) gesteuert, der aus Redundanzgründen mit mindestens zwei der Knoten (KNK1, KNK3) in Verbindung steht.

Dabei kommt das Problem hinzu, dass die Vielzahl der berechtigten Benutzer nicht jeweils an ein und demselben Terminal arbeitet, sondern sich einsatzabhängig an irgendeinem der Terminals einloggt und von dort aus die gewünschten Verbindungen hergestellt haben möchte.

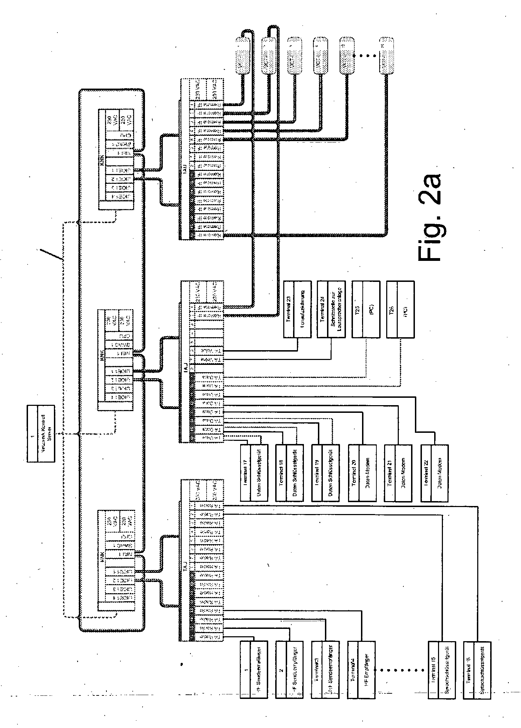

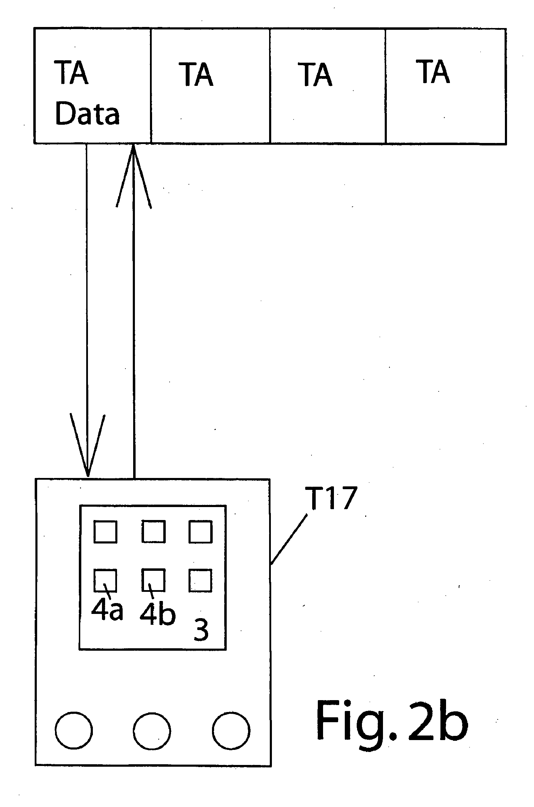

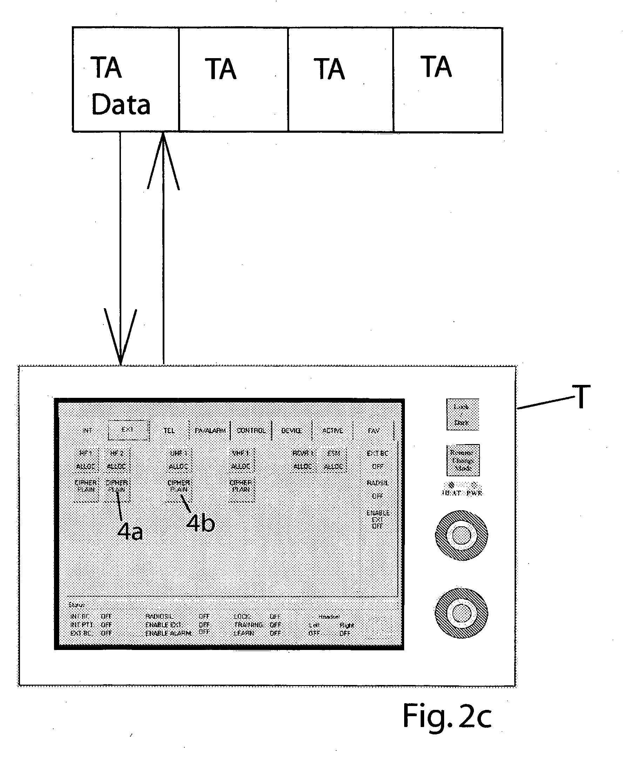

Die einzelnen, als Kommunikations-Endgeräte vom Benutzer zu bedienenden, Terminals sind dabei nicht einzeln, sondern über Terminaladapterunits (TAU's), in denen mehrere Terminaladapter (TA) zusammengefasst sind und die hierfür als körperlicher Baugruppenträger dienen, angeschlossen. Näheres zeigt das Blockschaltbild gemäß Fig. 2.

Dabei ist ersichtlich, dass in der Regel jedes Terminal (T1, T2...) mit einem Terminal-Adapter (TA) verbunden ist, von denen jeder einen Analog/Digital-Wandler (A/D) umfasst, um die vom Terminal eingegangenen Signale in digitale, vorzugsweise bereits komprimierte, nach dem PCM-Verfahren auf die Zeitschlitze eines Kanals verteilten Daten umzusetzen.

Wie Fig. 2a zeigt, sind die einzelnen Terminals (T1, T2...) abhängig von ihrer Funktion auf unterschiedliche Art und Weise mit einem Terminal-Adapter (TA) bzw. einer Terminal-Adapterunit (TAU) verbunden:

So benötigt T4 als Empfänger von Hochfrequenzsignalen nur einen Port und damit einen Kanal zum zugeordneten Terminaladapter (TA).

Dagegen benötigt zum Beispiel T17 als Datenverschlüsselungsgerät eine zweikanalige Verbindung zum zugehörigen Terminaladapter, da auf dem einen Kanal die unverschlüsselten Daten empfangen und auf dem anderen Kanal die bereits chiffrierten Daten an den Terminaladapter (TA) abgegeben werden müssen.

Als körperliche Leitungen zwischen diesen Terminals (T1, T2, ...) und den zugehörigen Terminaladaptern (TA) werden in der Regel Kupferkabel verwendet.

Fig. 2b zeigt beispielhaft, wie ein Terminal (T17) über seine zwei Kanäle an den zugehörigen Terminaladapter (TA) angebunden ist.

Um die von einem Terminaladapter (TA) zu bewältigenden Aufgaben einerseits möglichst gut an die Erfordernisse des jeweiligen Terminal-Typs anzupassen und dennoch die Anzahl unterschiedlicher Terminaladapter aus Wartungs- und Reparaturgründen gering zu halten, werden nur wenige verschiedene Typen von Terminaladaptern (TA) eingesetzt, beispielsweise TA-Radio, TA-Data und TA-Voice.

Darüber hinaus zeigt Fig. 2a im rechten Bildteil spezielle Terminals, so genannte Voice-Control-Terminals (VCT), wobei es sich um Sprechstellen mit zusätzlichen Kontrollfunktionen handelt.

Fig. 2c zeigt ein solches Voice-Control-Terminal (VCT), bei dem aufgrund des Einloggens eines Benutzers an diesem Terminal dessen Profil an dem entsprechenden Terminal geladen wird, was beispielsweise bewirkt, dass auf dessen berührungsempfindlichem Bildschirm virtuelle Tasten (4a,b...) angezeigt werden, die mit einer bestimmten Funktionalität belegt sind, die dieser Benutzer benötigt.

Zum einen ist in Figur 2a zu erkennen, dass Terminals mit nicht nur einem sondern mehreren verschiedenen Terminaladaptern (TA)verbunden sein können, sofern dies für ihre spezifische Funktion sinnvoll ist. Diese verschiedenen Terminaladapter (TA's) müssen auch nicht ein und derselben Terminaladapterunit (TAU) und nicht einmal demselben Knoten (KNK) zugeordnet sein.

Des weiteren zeigt diese Darstellung, dass Terminals (T) auch parallel geführt, sowohl einerseits nach dem E1-Format und andererseits mittels Ethernet-Format mit jedem Terminaladapter (TA) verbunden sein können, was die Ausfallsicherheit der gesamten Verbindung ebenso erhöht, wie die zuvor erwähnte Anbindung an zwei verschiedene Terminaladapter (TA's) an zum Beispiel zwei verschiedenen Knoten (KNK's).

Für Voice-Control-Terminals (VCTs) gilt dies nur analog, da VCTs vorzugsweise die Funktionalität eines Terminaladapters (TA) integriert haben und direkt an einen Knoten (KNK) angebunden sind.

Am Beispiel dieser VCTs ist ebenfalls dargestellt, dass es bei einigen Terminal-Typen, beispielsweise den VCTs, sinnvoll ist, den Terminaladapter (TA) mit all seinen Funktionen in das Terminal hinein zu verlegen, so dass an der entsprechenden Stelle des Terminaladapterunits (TAU) lediglich ein unechter Adapter in Form eines Remote-Interfaces (RIF) als Schnittstelle verbleibt.

Eine Besonderheit stellen auch die Terminals (T25) und (T26) dar, die Datenterminals in Form eines PC's sind und deshalb keine analogen sondern bereits digitale, allerdings serielle, Daten an den Terminaladapter abgeben bzw. von diesem benötigen.

Theoretisch wäre damit lediglich ein Umformatieren dieser bereits digital vorliegenden Daten zur Weiterleitung vom Terminaladapter (TA) upstream in Richtung Backbone, also zum Knoten (KNK), notwendig. Um jedoch Signale gleicher Qualitätsmerkmale durch alle Terminaladapter (TA) zu erzeugen, werden auch diese seriellen, digitalen Daten samt deren Steuersignalen in kleine Signaleinheiten zerlegt, in das E1-Format umgewandelt und am entsprechenden Empfänger-Terminal auf die gleiche Art und Weise wieder deterministisch zusammengesetzt, also ohne dass zwischen den einzelnen Signaleinheiten ein unzulässiger zeitlicher Versatz auftritt.

Dies wird erreicht indem die digitalen seriellen Daten hochfrequent vom gleichen A/D-Wandler wie ein analoges Signal abgetastet werden.

Die Terminaladapter sind in Gruppen von maximal zwei mal acht Stück in Terminaladapterunits (TAU) aufgenommen, die lediglich als Baugruppenträger dienen und keine eigene Funktionalität besitzen.

Jede dieser Terminaladapterunits (TAU's) ist mit einem Userinterface (UIOE) verbunden, von denen mehrere gemeinsam jeweils in einem Knoten (KNK1, KNK2) des Backbones vorhanden sind.

Die Verbindung zwischen Userinterface (UIOE) und zugehöriger Terminaladapterunit (TAU) erfolgt ebenfalls redundant parallel einerseits im E1-Format und andererseits im Ethernet-Format, vorzugsweise über Lichtwellenleiter, ebenso wie dies am Beispiel der Anwendung der VCT's dargestellt war.

Die zusätzliche Ethernet-Anbindung kann vorzugsweise auch bereits parallel von den einzelnen Terminals (T1, T2) zu den Terminaladaptern (TA) vorhanden sein, wodurch eine Ethernet-Verbindung aller Terminals (T1, T2...) untereinander als Notbehelf bei Ausfall des übrigen Kommunikationsnetzwerkes (KN) verbleibt.

Das Übermittlungsverfahren zu den Userinterfaces erfolgt nach dem *Time-Division-Multiplex-Prinzip* (TDM), indem mehrere TCM-Kanäle zeitlich ineinander verschachtelt werden und dadurch der Durchsatz vergrößert wird.

Jeder Knoten (KNK1, KNK2) umfasst neben meist mehreren Userinterfaces (UI-OE1.1, UIOE1.2, ...) mindestens
- eine Switching- and Conferencing-Einheit (SWAC),
- einen Network-Interface-Manager (NIM) und
- eine Steuereinheit (CPU)
   deren Funktion nachfolgend erläutert wird.

Für den knoteninternen Datenverkehr wird dabei ein spezieller Bus, der H.110-Bus, benutzt, auf dem die Daten im E1-Format transportiert werden.

Da dieser Bus deutlich schneller ist als die Signalleitungen zwischen Terminaladapterunits (TAU's) und den Knoten (KNK), wird innerhalb der Knoten (KNK) unter Beibehaltung des Datenformates E1 ein Umsetzen und Bündeln der Datenpakete in die Zeitschlitze des H.110-Buses durchgeführt, was von der Switchingand Conferencing-Einheit (SWAC) bewirkt wird.

Darüber hinaus stellt die Switching- and Conferencing-Einheit die Verbindung zwischen einem Terminal (T1), von dem sie über ein Userinterface (UIOE) knotenintern Signale zugeleitet erhält, und dem oder den gewünschten anderen Terminal (T2) als Kommunikationspartner her.

Dabei wird unter anderem in der SWAC zunächst unterschieden, ob der andere Kommunikationspartner am gleichen Knoten, zum Beispiel am Knoten (KNK1), hängt und wenn ja, an welchem Userinterface, zum Beispiel (UIOE1.2). In diesem Fall werden die Signale auf die Local-Userinterfaces des Network-Interface-Managers (NIM) gegeben, der die Signale knotenintern an den entsprechenden Userinterface (UIOE1.2) weiterleitet.

Falls der gewünschte Kommunikationspartner einem anderen Knoten, zum Beispiel Knoten (KNK2) zugeordnet ist, werden die Signale von der SWAC an die externen Userinterfaces des NIM gegeben und von dort über den ATM-Bus des Backbones an den entsprechenden Knoten, zum Beispiel Knoten(KNK2), und die dortige NIM2 weitergeleitet, von wo aus die knoteninterne Verteilung an das dortige entsprechende Userinterface (UIOE) usw. erfolgt.

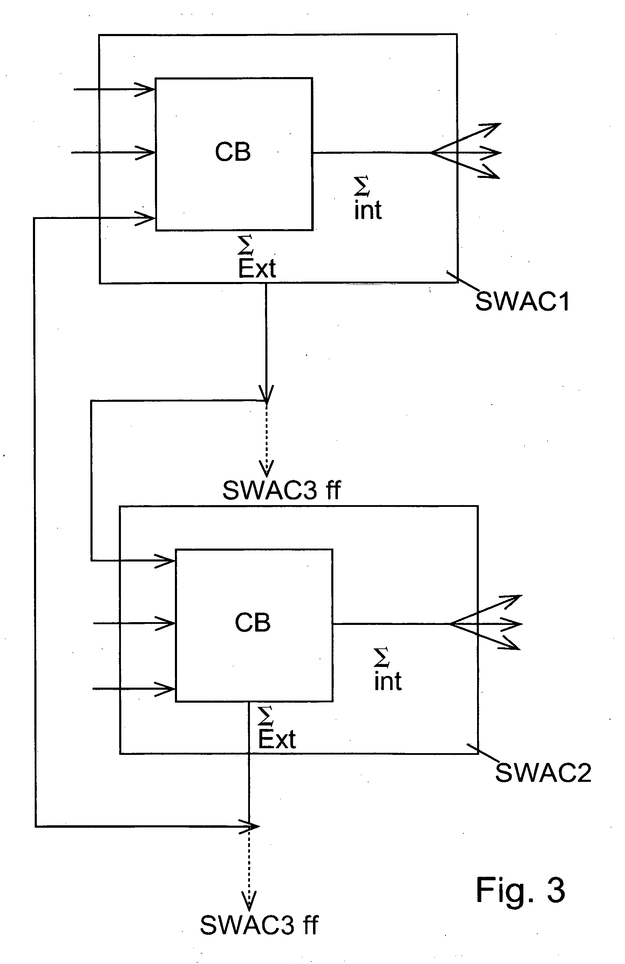

Für den Fall, dass eine Verbindung mit nicht nur einem, sondern mehreren Kommunikationspartnern gleichzeitig hergestellt werden soll, also eine Konferenzschaltung erstellt werden soll, wird diese in der SWAC wie folgt gemäß Fig. 3 realisiert:

Zunächst werden die Eingangssignale aller internen, also am eigenen Knoten (KNK1) hängenden Konferenzteilnehmer, sowie alle von anderen Knoten (KNK2, ...) bzw. deren SWAC's... eingehenden externen Summensignale in einem Konferenz-Block (CB) zu einem internen Summensignal addiert. Dieses interne Summensignal wird an jeden der internen Konferenzteilnehmer weitergeleitet, wobei vorher dessen jeweiliges spezifisches Eingangssignal mittels eines Konferenzfilters (2) von dem internen Summensignal abgezogen wird, damit der Teilnehmer seine eigene Eingabe, zum Beispiel Spracheingabe, nicht hört bzw. nicht eingespielt erhält.

Darüber hinaus wird aus den eingegangenen Signalen der am eigenen Knoten hängenden, internen Konferenzteilnehmer eine Summenbildung zu einem externen Summensignal durchgeführt, und dieses externe Summensignal an alle anderen an der Konferenz beteiligten SWACs gesandt.

Da analog von allen an der Konferenz beteiligten SWACs vorgegangen wird, liegt letztendlich bei jedem einzelnen an der Konferenz teilnehmenden Terminal (T) ein Signal an, welches der Summe aller von den anderen Konferenzteilnehmern abgegebenen Signale entspricht, das selbst in die Konferenz eingegebene Signal jedoch nicht enthält.

Lediglich der Vollständigkeit halber sei erwähnt, dass die in jedem Knoten vorhandene Steuereinheit (CPU) über einen entsprechenden Switch nicht nur über den ATM-Bus des Backbones, sondern zusätzlich auch über eine separate Ethernet-Verbindung, die beispielsweise über Kupferleitungen realisiert werden kann, mit dem das gesamte Netzwerk steuernden Server (1) in Verbindung steht, der auf diese Art und Weise vorzugsweise mit allen (KNK) Knoten und den dortigen Steuereinheiten (CPU's), mindestens jedoch aus Redundanzgründen mit zwei Knoten und den dortigen CPU's, über das Ethernet verbunden ist.

Vom Server (1) werden die an der jeweiligen Steuereinheit (CPU) benötigten Konfigurationen und Einstellungen dort aufgespielt, wobei dies vorzugsweise in einem solchen Umfang erfolgt, dass bei einer vollständigen Trennung des ATM-Busses, also insbesondere der Ringleitung (RL) in zwei getrennte Stränge, die beiden Stränge selbstheilend jeweils neue Teilnetzwerke bilden können, gesteuert von den auf den beteiligten Steuereinheiten (CPU's) der entsprechenden Knoten hinterlegten Einstellungen und Ablaufprogrammen.

Zusätzlich wird im gesamten Netzwerk (KN) zwischen geheimhaltungsbedürftigen, so genannten roten Daten und Signalen einerseits, und nicht-geheimhaltungsbedürftigen, da zum Beispiel bereits chiffrierten, schwarzen Daten bzw. Signalen unterschieden, wobei strikt sichergestellt sein muss, dass rote Signale nur auf die hierfür vorgesehenen Datenwege gebracht werden. Hierfür werden zwar keine körperlich getrennten Leitungen benutzt, da upstream der Terminaladapter (TA) jedoch nur noch digitale Daten vorliegen und die Übermittlung dieser digitalen Daten über definiert zuzuordnende Zeitschlitze erfolgt, kann eine definierte Aufteilung der Zeitschlitz in rote und schwarze Zeitschlitze erfolgen und sichergestellt werden, dass rote Daten nur in rote Zeitschlitze und schwarze Daten nur in schwarze Zeitschlitze gelangen.

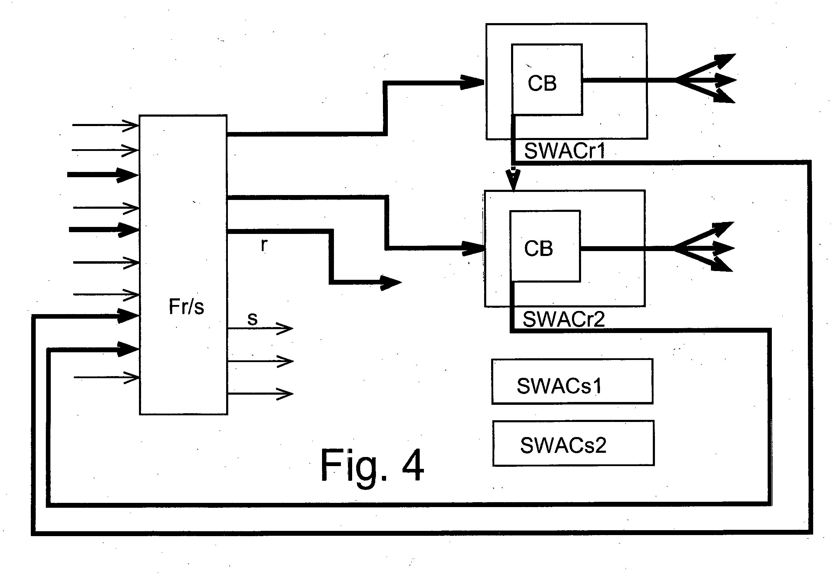

Auch diese Rot/Schwarz-Trennung und entsprechende Zuordnung in die Zeitschlitze wird von der Switching- and Conferencing-Einheit (SWAC) durchgeführt, wie anhand der Fig. 4 dargestellt:

Kernstück ist dabei eine Rot/Schwarz-Filter (F-r/s) der rote und schwarze Datenpakete unterscheidet, zum Beispiel anhand einer jedem Datenpaket zugeordneten Kennziffer, wobei die Bedeutung der einzelnen Kennziffern vorab festgelegt und hinterlegt wurde.

Um die Rot/Schwarz-Trennung manipulationssicher zu gestalten, ist der Rot/Schwarz-Filter (F-r/s) nicht als Software-Lösung ausgeführt, sondern als unveränderbare Hardware, beispielsweise als EPROM, gebrannt.

Erst nach der durchgeführten Rot/Schwarz-Trennung erfolgt dann die Signalweiterleitung, Konferenzbildung und Ähnliches, wie oben anhand der Funktion des SWAC bereits dargelegt, wofür innerhalb jedes SWAC getrennte Schalteinheiten (SWAC-r und SWAC-s) für rote und schwarze Daten existieren, die ihre Daten ausschließlich an die Teil-SWAC's der entsprechenden Farbe weitergeben, indem sie ausschließlich Zeitschlitze der entsprechenden Farbe auf dem ATM-Bus benutzen.

### BEZUGSZEICHENLISTE

- 1: Server
- 2: Konferenzfilter
- 3: Bildschirm
- 4a,b: virtuelle Tasten
- CB: Konferenz-Block
- CPU: Steuereinheit
- F-r/s: Rot/Schwarz-Filter
- KE: Kommunikationsendgerät
- KN: Kommunikationsnetzwerk
- KNK: Kommunikationsnetzwerk-Knoten
- RL: Ringleitung
- RIF: Remote Interface
- SL: Sternleitung
- T1, T2...: Terminal
- TA: Terminaladapter
- TAU: Terminaladapter-Einheit
- TAB: Terminaladapter-Block
- A/D: A/D-Wandler
- NIM: Network-Interface-Manager
- SWAC: Switching & Conferencing-Einheit
- UIOE1: User Interface
- VCT: Voice & Control-Endgerät

## Patentansprüche

1. Kommunikationssystem mit
- einem ATM-basierten Kommunikationsnetzwerk (KN) zur digitalen Datenübertragung,
- in dessen Verlauf mehrere Kommunikationsnetzwerk-Knoten (KNK) als Zugang in das Kommunikationsnetzwerk (KN) angeordnet sind,
- von denen mindestens einer mit einem Kommunikationsnetzwerk-Server (1) in Verbindung steht und
- Terminaladaptern (TA's) zum Anschluss von Kommunikationsendgeräten (KE) an das Kommunikationsnetz (KN) über dessen Knoten (KNK),
wobei jeder Knoten (KNK1, KNK2...) umfasst:
- eine Switching & Conferencing-Einheit (SWAC), die die dort von einem Terminaladapter (TA1) ankommenden Signale zu einem anderen Terminaladapter (TA2) weitervermittelt und gegebenenfalls auch eine Konferenzbildung zwischen mehr als zwei Terminaladaptern (TA1, TA2...) durchführen kann,
- einen Network-Interface-Manage (NIM), der als Schnittstelle des Knotens (KNK1, KNK2...) zum Kommunikationsnetzwerk (KN) dient, und
- einen A/D-Wandler (A/D), der in der Lage ist, auch breitbandige analoge Signale zu digitalisieren,
**dadurch gekennzeichnet, dass**
ein in den Switching & Conferencing-Einheiten (SWAC) und damit im Knoten (KNK) angeordneter Konferenzblock (CB) vorhanden ist, der die Signale der intern und extern bezüglich des betreffenden Knotens (KNK) an der Konferenz beteiligten Terminals (T1, T2...) aufsummiert und den intern an diesem Knoten (KNK) angeschlossenen teilnehmenden Terminals (T) zur Verfügung stellt, wobei ein Konferenzfilter (2) des Konferenzblocks (CB) die vom jeweiligen Terminal (T) selbst abgegebenen Signale vor der Abgabe an das Terminal (T) abzieht, so dass die Switching & Conferencing-Einheit (SWAC) in der Lage ist, Konferenzschaltungen zwischen einer theoretisch beliebig großen Anzahl von Teilnehmern derart durchzuführen, dass jedem Teilnehmer die von allen anderen Teilnehmern abgesandten Signale zugänglich gemacht werden mit Ausnahme der von diesem Teilnehmer selbst abgegebenen Signale, die über den jeweiligen Konferenzfilter (2) ausgefiltert werden.

2. Kommunikationssystem nach Anspruch 1,
**dadurch gekennzeichnet, dass**
- in jedem Terminaladapter (TA) mindestens ein A/D- und/oder ein D/A-Wandler vorhanden ist zur Kodierung von analogen Signalen der Terminals (T1..) in PCM und zur Dekodierung von PCM in analoge Signale für die Terminals (T1..), und/oder insbesondere
- jeder Knoten (KNK1, KNK2...) mehrere User Interfaces (UIOE1.1, UIOE1.2, ...) aufweist, an die jeweils eine Anzahl von Terminaladaptern (TA), insbesondere acht Terminaladapter (TA), über den E1-Standard mittels Lichtwellenleiter oder Kupferleitung angebunden sind, und/oder ins-besondere
- innerhalb eines Knotens (KNK1, KNK2) die Daten über einen Knoten-internen Bus, insbesondere einen H.110-Bus, transportiert werden, jedoch im gleichen E1-Format wie die Kommunikation zwischen Terminaladaptern (TA) und User-Interfaces (UIOE), und insbesondere die Switching & Conferencing-Einheit (SWAC) die von den TA's kommenden Signale in die Time-slots des demgegenüber schnelleren knoteninternen Busses zeitlich einordnet.

3. Kommunikationssystem nach einem der vorhergehenden Ansprüche, **dadurch gekennzeichnet, dass**
- das Kommunikationsnetzwerk (KN) zwischen den Knoten (KNK) aus Timedivision-modulated Datenstrecken (TDM-Highways) im ATM-Format aufgebaut ist, und/oder insbesondere
- der Network-Interface-Manager (NIM) die im El-Format vorliegenden Daten unter anderem in das ATM-Format umwandelt, und/oder insbesondere
- die Switching & Conferencing-Einheit (SWAC) in der Lage ist, die Datenpakete zwischen den Knoten parallel über bis zu 13 Kanäle mit je 64 kHz zu vermitteln.

4. Kommunikationssystem nach einem der vorhergehenden Ansprüche, **dadurch gekennzeichnet, dass**
- der A/D-Wandler (A/D) breitbandige analoge Audio-Signale mit 48 kHz abtastet und mit 16 Bit in 12 TDM-Zeitschlitze von je 64 kBps für den Tranpsort über das Netzwerk kodiert und der entsprechende D/A-Wandler 12 empfangene TDM-Zeitschlitze in breitbandige entsprechende Audio-Signale zurückwandelt, und/oder insbesondere
- der A/D-Wandier (A/D) in der Lage ist, ein serielles digitales Signal samt den zugehörigen Steuersignalen durch hochauflösendes Abtasten in kleine Dateneinheiten zu zerlegen und der D/A-Wandler am empfangenden Terminal (T) in der Lage ist, diese kleinen Dateneinheiten zu dem ursprünglichen seriellen digitalen Signal zusammenzusetzen.

5. Kommunikationssystem nach einem der vorhergehenden Ansprüche,
**dadurch gekennzeichnet, dass**
der A/D-Wandier (AD) ein serielles digitales Signal hochauflösend abtastet und mit 1 Bit pro Abtastpunkt in mehrere parallele TDM-Zeitschlitze kodiert.

6. Kommunikationssystem nach einem der vorhergehenden Ansprüche,
**dadurch gekennzeichnet, dass**
- im Server (1) die Ablaufregeln für die Zugriffssteuerungen (NIM) in den einzelnen Knoten (KNK) und/oder die Aufgabenverteilung auf die in jedem Knoten (KNK) vorhandene zentrale Steuereinheit (CPU) erstellt werden und damit in jedem Knoten (KNK) im Netzwerk (KN) hinterlegt werden, und/oder insbesondere
- mehrere Terminaladapter (TA), insbesondere 2 x 8 Terminaladapter (TA) in einer Terminaladapter-Unit (TAU) untergebracht sind, und/oder insbe-sondere
- jedes zum Senden und Empfangen geeignete Terminal (T) nur mittels einem Terminaladapter (TA) und dieser mit einem oder aus Redundanzgründen mit zwei Netzwerkknoten (KNK) verbunden ist.

7. Kommunikationssystem nach einem der vorhergehenden Ansprüche,
**dadurch gekennzeichnet, dass**
- ein Terminaladapter (TA) mit mehreren einkanaligen Sprach-Terminal (T) verbunden sein kann, und/oder insbesondere
- die Knoten (KNK) über zusätzliche Ethernetschnittstellen, insbesondere 100/1000 Mb-Ethernet-Schnittstellen, zur Integration von IP-Diensten verfügen.

8. Kommunikationssystem nach einem der vorhergehenden Ansprüche,
**dadurch gekennzeichnet, dass**
- die Terminaladapter (TA) einheitliche Schnittstellen nach dem E1-Standard zur Verbindung zum Netzwerkknoten (KNK) besitzen und insbesondere zusätzlich eine einheitliche Ethernetschnittstelle umfassen, und/oder insbesondere
- in Terminals (T), die nur als Sprechstelle dienen, der Terminaladapter (TA) integriert ist.

9. Kommunikationssystem nach einem der vorhergehenden Ansprüche,
**dadurch gekennzeichnet, dass**
separate Terminaladapter (TA) in unterschiedlichen Varianten, insbesondere als
- TA-Radio zum Anschluss von Endgeräten mit Schwerpunkt auf Audio-Übertragung,
- TA-Data zum Anschluss von Endgeräten mit Schwerpunkt auf Datenübertragung, und
- TA-Voice zum Anschluss von Endgeräten mit Schwerpunkt auf Audio und Sprache
vorliegen.

10. Kommunikationssystem nach einem der vorhergehenden Ansprüche,
**dadurch gekennzeichnet, dass**
- das Kommunikationsnetzwerk (KN) redundant doppelt ausgeführt ist, insbesondere durch körperlich doppelte Leitungen, und jeder Knoten (KNK) mit beiden Leitungen (RL1, RL2) mindestens mit zwei anderen Knoten verbunden ist, und/oder insbesondere
- die Leitung des Kommunikationsnetzwerkes (KN) zwischen den Knoten (KNK) eine Ringleitung (RL1, RL2) ist, und/oder insbesondere
- alle Terminaladapter (TA's) und/oder alle Knoten (KNK) mit den jeweils analogen anderen Elementen sowie auch Elemente-spezifisch übergreifend parallel zum Kommunikationsnetzwerk (KN) über ein LAN, insbesondere nach dem Ethernet-Standard, insbesondere nur zur Übertragung von Steuerdaten, miteinander verbunden sind.

11. Kommunikationssystem nach einem der vorhergehenden Ansprüche,
**dadurch gekennzeichnet, dass**
- zumindest einige Terminals (T1, T2...) insbesondere die als Systemeigene Sprechstellen vorhandenen Voice & Control Audio-Endgeräte (VCT), hinsichtlich ihrer Funktionselemente frei konfigurierbar sind und insbesondere über einen berührungsempfindlichen Bildschirm (3) verfügen, der frei konfigurierbare Funktionselemente darstellen kann und dass im Kommunikationsnetzwerk (KN), insbesondere in dessen Server (1), Benutzerprofile hinterlegt sind, die eine definierte benutzerspezifische Konfiguration bestimmter, insbesondere aller vorhandener, Terminals (T) enthalten, und/oder insbesondere
- wenigstens im Kommunikationsnetz (KN), also auf den TDM-Highways, sowie in den Knoten (KNK), insbesondere auch in den Sternleitungen (SL) zwischen den Terminaladaptern (TA) und den Knoten (KNK), als auch in den Terminaladaptern (TA's), eine strikte Trennung vom sicherheitsrelevanten roten Datenwegen (r) und nicht-sicherheitsrelevanten schwarzen Datenwegen (s), die insbesondere auf der gleichen körperlichen Leitung, nur zeitlich getrennt, verlaufen, vorhanden ist, und/oder insbesondere
- rote (r) und schwarze Datenwege (s) bei Benutzung der gleichen körperlichen Leitungen (Lr, Ls) durch fest voneinander abgegrenzte Zeitschlitze beim Zeitmultiplexverfahren (TDM) getrennt sind.

12. Verfahren zum Betreiben eines Kommunikationssystems mit
- einem ATM-basierten, insbesondere ringförmigen, Kommunikationsnetzwerk (KN) zur digitalen Datenübertragung,
- in dessen Verlauf mehrere Kommunikationsnetzwerk-Knoten (KNK) als Zugang in das Kommunikationsnetzwerk (KN) angeordnet sind,
- von denen mindestens einer mit einem Kommunikationsnetzwerk-Server (1) in Verbindung steht, und
- Terminaladapter (TA) zum Anschluss von Terminals (T) an das Kommunikationsnetz (KN) über dessen Knoten (KNK),
- wenigstens einem A/D-Wandler (A/D) zum Umwandeln von analogen in digitale Signale, wobei auch breitbandige analoge Signale, insbesondere von 0 kHz bis 22 kHz und/oder einem Dynamikbereich von bis zu 80 dB, digitalisiert werden,
**dadurch gekennzeichnet, dass**
- zwischen mehr als zwei Terminals (T) Konferenzschaltungen durchgeführt werden können, indem jeder Teilnehmer senden und empfangen kann und dabei jeder Teilnehmer die Signale aller anderen Teilnehmer empfängt, die von ihm selbst gesendeten Signale ihm selbst jedoch nicht mehr zugespielt, insbesondere von dem ihm zugeordneten Konferenzfilter (2) ausgefiltert werden.

13. Verfahren nach Anspruch 12,
**dadurch gekennzeichnet, dass**
- in jeden Terminaladapter (TA) mindestens ein A/D- und ein D/A-Wandler angeordnet wird zur Kodierung von analogen Signalen der Terminals (T1...), in PCM und zur Dekodierung von PCM in analoge Signale für die Terminals (T1...), und/oder insbesondere
- die Switching & Conferencing-Einheit (SWAC) die digitalisierten Datenzellen zwischen den Knoten (KNK) parallel über bis zu 13 Kanäle mit je 64 kHz vermittelt.

14. Verfahren nach einem der vorhergehenden Verfahrensansprüche,
**dadurch gekennzeichnet, dass**
- in jeden Knoten (KNK) mehrere User-Interfaces (UIOE1.1, UIOE1.2, ...) angeordnet werden, an die jeweils eine Anzahl von Terminaladaptern (TA), insbesondere acht Terminaladapter (TA), über den E1-Standard mittels Lichtwellenleiter oder Kupferleitung angebunden werden, und/oder insbesondere
- von einem Terminal (T) am Terminaladapter (TA1) ankommende serielle, digitale Daten (z. B. PC-Daten) samt den zugehörigen Steuersignalen in kleine Dateneinheiten zerlegt, über das Kommunikationsnetzwerk (KN) übertragen und am ausgebenden Terminaladapter (TA2) wieder zu dem ursprünglichen seriellen, digitalen Signal zusammengesetzt werden, ohne unzulässigen zeitlichen Versatz der Dateneinheiten zueinander.

15. Verfahren nach einem der vorhergehenden Verfahrensansprüche,
**dadurch gekennzeichnet, dass**
- das Zerlegen der seriellen digitalen Daten in kleine Dateneinheiten erfolgt durch hochauflösendes Abtasten des seriellen digitalen Signals durch den A/D-Wandler (A/D) und Einordnen der erzielten Dateneinheiten in mehrere parallele TDM-Zeitslots, und/oder insbesondere
- die einzelnen Kanäle in Zeitschlitze nach dem Zeitmultiplexverfahren (TDM) aufgeteilt sind.

16. Verfahren nach einem der vorhergehenden Verfahrensansprüche,
**dadurch gekennzeichnet, dass**
- bei Konferenzschaltungen jeder Teilnehmer auf einem eigenen Kanal, insbesondere in Form eines Zeitschlitzes, sendet und auf einem anderen Kanal, insbesondere Timeslot, empfängt, wobei die Kanäle in der Switching & Conferencing-Einheit (SWAC) gemischt bzw. entmischt werden.

17. Verfahren nach einem der vorhergehenden Verfahrensansprüche,
**dadurch gekennzeichnet, dass**
- sicherheitsrelevante rote Daten (r) und nicht-sicherheitsrelevante schwarze Daten (s) strikt getrennt gehandhabt und transportiert werden, insbesondere durch strikte Trennung im Zeitbereich, und/oder insbesondere
- beim Einloggen eines Benutzers an einem Terminal (T) diesem Endgerät ein im Server (1) des Kommunikationsnetzes (KN) hinterlegtes Benutzerprofil zugespielt wird, durch welches das neutral konfigurierte Terminal (T) hinsichtlich seiner Ein- und/oder Ausgabeeinheiten benutzerspezifisch konfiguriert wird, insbesondere auf dessen berührungsempfindlichem Bildschirm (3) nutzerdefinierte Ein- bzw. Ausgabeelemente (4a, b) angezeigt werden, und/oder insbesondere
- der Server (1) des Kommunikationsnetzes (KN) mit mindestens zwei Knoten (KNK) in Verbindung steht und bei Unterbrechung der Hauptverbindung zu einem ersten Knoten der Server (1) automatisch auf eine der Zweitverbindungen mit einem anderen Knoten (KNK) umschaltet.

18. Verfahren nach einem der vorhergehenden Verfahrensansprüche,
**dadurch gekennzeichnet, dass**
- die Rot/Schwarz-Filter (F-r/s) durch Aufteilen von auf der gleichen Leitung in Zeitschlitzen übermittelten roten (r) und schwarzen (s) Daten in separate rote und schwarze Datenwege (Lr, Ls) gegen jedwede Veränderungen permanent geschützt werden, indem die Filter (F-r/s) durch unterschiedliche Filtercodes ständig gekennzeichnet sind, die unveränderbar im EPROM des Filters hinterlegt sind und über die Auswahl des Codes aktiviert werden, wobei bei wiederholter Vorgabe eines falschen Codewertes der Filter deaktiviert wird, ein Alarm mit Fehlermeldung am entsprechenden Knoten und am Server ausgegeben wird und der Betrieb des Knotens (KNK) eingestellt wird bis der Alarm manuell am Knoten (KNK) quittiert wurde, und/oder insbesondere
- bei einer an zwei Stellen unterbrochenen Ringleitung (RL1, RL2) des Kommunikationsnetzwerkes (KNK) die Steuereinheiten (CPU's) der Knoten (KNK) und/oder der Server (1) des Kommunikationsnetzwerkes (KN) automatisch die getrennten Teile des Kommunikationsnetzwerkes als separate Teil-Netzwerke (KNK1, KNK2) weiter betreiben.

## Claims

1. A communication system comprising:
- an ATM based communication network (KN) for digital data transmission,
- in whose path plural communication network nodes (KNK) are arranged as an access to the communication network (KN)
- wherein at least one communication network node is connected with a communication network server (1), and
- terminal adapters (TA's) for connecting communication terminals (KE) with the communication network (KN) through its nodes (KNK),
wherein each node (KNK1, KNK2...) includes:
- a switching and conferencing unit (SWAC) which switches signals arriving there from a terminal adapter (TA1) to another terminal adapter (TA2) and which optionally can also form a conference link between more than two terminal adapters (TA1, TA2...),
- a network interface manager (NIM) which is used as an interface of the node (KNK1, KNK2...) to the communication network (KN), and
- an A/D converter (A/D) which is capable of digitizing also broad band analog signals,
**characterized in that**
a conference block (CB) is provided that is arranged in the switching and conferencing units (SWAC) and thus in the node (KNK), wherein the conference block sums the signals of the terminals (T1, T2...) that are internally and externally participating in the conference with respect to the respective node (KNK) and wherein the conference block provides the summation signal to the participating terminals (T) that are internally connected at this nodes (KNK), wherein a conference filter (2) of the conference block (CB) subtracts the signals put out by the respective terminal (T) itself before putting them out to the terminal (T), so that the switching and conferencing unit (SWAC) is enabled to provide conference switching between a theoretically unlimited number of participants so that each participant has access to the signals put out by all other participants besides the signals put out by the participant himself which are filtered out by the respective conference filter (2).

2. The communication system according to claim 1, **characterized in that**
- each terminal adapter (TA) includes at least one A/D and/or at least one D/A converter for encoding analog signals of the terminals (T1...) in PCM and for decoding PCM into analog signals for the terminals (T1...),
and/or in particular
- each node (KNK1, KNK2...) includes plural user interfaces (UIOE1.1, UIOE1.2...) at which respectively a plurality of terminal adapters (TA), in particular eight terminal adapters (TA) are connected through the E1-standard through a light wave conductor or a copper conductor and/or in particular
- within a node (KNK1, KNK2) the data is transported through a node internal bus, in particular a H.110-bus, however in the same E1-format as the communication between terminal adapters (TA) and user interfaces (UIOE), and in particular the switching and conferencing unit (SWAC) sorts the signals coming from the TA's into the time slots of the faster node internal bus in a time based manner.

3. The communication system according to one of the preceding claims,
**characterized in that**
- the communication network (KN) is configured between the nodes (KNK) from time division modulated data paths (TDM-highways) in ATM-format and/or in particular
- the network interface manager (NIM) converts the data provided in E-1format into the ATM-format among other formats and/or in particular
- the switching and conferencing unit (SWAC) is capable of switching the data packets between the nodes in parallel through up to 13 channels with 64 kHz respectively.

4. The communication system according to one of the preceding claims,
**characterized in that**
- the A/D converter (A/D) scans broad band analog signals with 48 kHz and encodes them with 16 bit into 12 TDM-time slots of 64 kBps respectively for transportation through the network and the respective D/A converter 12 reconverts received TDM time slots into broad band respective audio signals,
and/or in particular
- the A/D converter (A/D) is configured to disassemble a serial digital signal including the associated control signals through high resolution scanning into small data units and the D/A converter at the receiving terminal (T) is capable to assemble the small data units to form the original serial digital signal.

5. The communication system according to one of the preceding claims,
**characterized in that**
the A/D converter (A/D) scans a serial digital signal with high resolution and encodes it with 1 bit per scanning point into plural parallel TDM-time slots.

6. The communication system according to one of the preceding claims,
**characterized in that**
the procedural rules for the access control (NIM) in the individual nodes (KNK) and/or the task distribution for the central control unit (CPU) provided in each node (KNK) are generated in the server (1) and thus stored in each node (KNK) in a network (KN) and/or in particular
- plural terminal adapters (TA), in particular 2 x 8 terminal adapters (TA) are stored in a terminal adapter unit (TAU) and/or in particular
- each terminal (T) configured for transmitting and receiving is only connected through one terminal adapter (TA) and the one terminal adapter (TA) is connected either with one network node (KNK) or for redundancy reasons with two network nodes (KNK).

7. The communication system according to one of the preceding claims,
**characterized in that**
- a terminal adapter (TA) can be connected with plural one channel voice terminals (T), and/or in particular
- the nodes (KNK) include additional Ethernet interfaces, in particular 100/1000 Mb Ethernet interfaces for integrating IP services.

8. The communication system according to one of the preceding claims,
**characterized in that**
- the terminal adapters (TA) have uniform interfaces according to the E1-standard for connecting with the network node (KNK) and in particular additionally have a uniform Ethernet interface and/or in particular
- the terminal adapter (TA) is integrated in terminals (T) which are only used as voice inputs.

9. The communication system according to one of the preceding claims,
**characterized in that**
separate terminal adapters (TA) are provided in different variants, in particular as
- TA radio for connecting terminals with emphasis on audio transmission,
- TA-data for connecting terminals with emphasis on data transmission, and
- TA-voice for connecting terminals with emphasis on audio and voice.

10. The communication system according to one of the preceding claims,
**characterized in that**
- the communication network (KN) is configured redundant double, in particular through physically doubled conductors and each node (KNK) is connected with both conductors (RL1, RL2) at least with two other nodes,
and/or in particular
- the conductor of the communication network (KN) between the nodes (KNK) is a ring conductor (RL1, RL2) and/or in particular
- all terminal adapters (TA's) and/or all nodes (KNK) are connected with one another with the respective other analog elements and also elements specific over reaching parallel to the communication network (KN) through a LAN, in particular according to the Ethernet standard, in particular only for transmitting control data.

11. The communication system according to one of the preceding claims,
**characterized in that**
- at least some terminals (T1, T2...), in particular the voice and control audio terminals (VCT) provided as system internal voice inputs are freely configurable with respect to their functional elements and in particular include a touch sensitive screen (3) which can represent freely configurable functional elements, and wherein user profiles are stored in the communication network (KN), in particular in its server (1), wherein the user profiles include a defined user specific configuration of particular, in particular all provided terminals (T) and/or in particular
- at least in the communication network (KN), thus on the TDM highways and in the nodes (KNK), in particular also in the star conductors (SL) between the terminal adapters (TA) and the nodes (KNK) and also in the terminal adapters (TA) a strict separation of security relevant red data paths (r) and non security relevant black data paths (s) is provided which run in particular on the same physical conductor only time separated and/or in particular
- red (r) and black (s) data paths are separated when using the same physical conductors (Lr, Ls) through time slots that are firmly separated from one another during a time multiplex method (TDM).

12. A method for operating a communication system including,
- an ATM based, in particular annular communication network (KN) for digital data transmission,
- over whose path plural communication network nodes (KNK) are arranged as an access to the communication network (KN)
- wherein at least one of the communication network nodes is connected with a communication network server (1), and
- terminal adapters (TA) for connecting terminals (T) to the communication network (KN) through its nodes (KNK),
- at least one A/D converter (A/D) for converting analog signals into digital signals, wherein also broad band analog signals in particular with 0 kHz to 22 kHz and/or with a dynamic range of up to 80 dB are digitized,
**characterized in that**
- conference switching can be performed between more than two terminals (T) in that each participant can transmit and receive and so that each participant receives the signals of all other participants but the signals transmitted by this participant himself are not fed to this participant anymore and are in particular filtered out by the conference filter (2) associated with the participant.

13. The method according to claim 12,
**characterized in that**
- each terminal adapter (TA) includes at least one A/D converter and at least one D/A converter for encoding analog signals of the terminals (T1...) in PCM and for decoding PCM into analog signals for the terminals (T1) and/or in particular
- the switching and conferencing unit (SWAC) switches the digitized data cells between the nodes (KNK) in parallel and through up to 13 channels with 64 kHz respectively.

14. The method according to one of the preceding method claims,
**characterized in that**
- each node (KNK) includes plural user interfaces (UIOE1, UIOE2...) to which respectively a number of terminal adapters (TA), in particular eight terminal adapters (TA) are connected through the E1-standard through light wave conductors or copper conductors and/or in particular
- serial, digital data (e.g. PC-data) including the associated control signals and arriving from a terminal (T) at the terminal adapter (TA1) is disassembled into small data units transmitted through the communication network (KN) and reassembled at the outputting terminal adapter (TA2) again to form the original serial digital signal without impermissible time based offset of the data units relative to one another.

15. The method according to one of the preceding method claims,
**characterized in that**
- disassembling the serial digital data into small data units is provided through high resolution scanning of the serial digital signal through the A/D converter (A/D) and sorting the obtained data units into plural parallel TDM time slots, and/or in particular
- dividing the individual channels into time slots according to the time multiplex method (TDM).

16. The method according to one of the preceding method claim,
**characterized in that**
- in conference switchings each participant transmits on a proprietary channel, in particular configured as a time slot, receives on another channel, in particular a time slot, wherein the channels are mixed or demixed in the switching and conferencing unit (SWAC).

17. The method according to one of the preceding method claims,
**characterized in that**
- security relevant data (r) and non security relevant black data (s) is handled and transported strictly separately, in particular through strict separation in the time range and/or in particular
- when a user logs in at a terminal (T) the terminal is provided with a user profile that is stored in the server (1) of the communication network (KN), through which user profile the neutrally configured terminals (T) is configured user specific with respect to its input and/or output units, in particular user defined input or output elements (4a, b) are displayed on its touch sensitive screen (3) and/or in particular
- the server (1) of the communication network (KN) is connected with at least two nodes (KNK) and when the main connection is interrupted to a first node, the server (1) switches automatically to one of the secondary connections with another node (KNK).

18. The method according to one of the preceding method claim,
**characterized in that**
- the red/black filters (f-r/s) are permanently protected against any change through dividing the red data (r) and the black data (s) transmitted on the same conductor in time slots in separate red and black data paths (Lr, Ls), **in that** the filters (F-r/s) are continuously **characterized by** different filter codes which are invariably stored in the EPROM of the filter and activated by selecting the code, wherein the filter is deactivated when a wrong code value is repeatedly predetermined, an alarm with error message is put out at the respective node and at the server, and operations of the node (KNK) are suspended until the alarm is manually confirmed at the node (KNK) and/or in particular
- for a ring conductor (RL1, RL2) interrupted at two locations of the communication network (KNK) the control units (CPU's) of the nodes (KNK) and/or of the servers (1) of the communication network (KN) automatically continue to operate the separate components of the communication network as separate partial networks (KNK1, KNK2).

## Revendications

1. Système de communication avec
- un réseau de communication de type ATM (KN) pour la transmission de données numériques,
- dans lequel plusieurs noeuds de réseau de communication (KNK) sont disposés en tant qu'accès au réseau de communication (KN),
- dont au moins un est connecté à un serveur de réseau de communication (1), et
- des adaptateurs de terminal (TA) pour la connexion de terminaux de communication (KE) au réseau de communication (KN) par l'intermédiaire de ses noeuds (KNK),
- chaque noeud (KNK1, KNK2 ...) comprenant :
- une unité de commutation et de conférence (SWAC), qui transmet les signaux provenant d'un adaptateur de terminal (TA1) à un autre adaptateur de terminal (TA2) et qui peut établir le cas échéant également une conférence entre lus de deux adaptateurs de terminal une conférence sur l'éducation entre plus de deux adaptateurs de terminaux (TA1, TA2 ...) peut effectuer, et
- un gestionnaire d'interface de réseau (NIM), qui sert d'interface entre le noeud (KNK1, KNK2 ...) et le réseau de communication (KN), et
- un convertisseur analogique/numérique (A/D) qui est en mesure de numériser également des signaux analogiques à large bande,
**caractérisé en ce qu'**
il est prévu un bloc de conférence (CB) disposé dans les unités de commutation et de conférence (SWAC) et ainsi dans le noeud (KNK), bloc qui peut additionner les signaux des terminaux (T1, T2...) internes et externes par rapport à ce noeud (KNK) participant à la conférence et met à disposition le terminal (T) participant raccordé en interne à ce noeud (KNK), un filtre de conférence (2) du bloc de conférence (CB) déduisant les signaux envoyés par le terminal respectif lui-même avant la remise au terminal (T) de sorte que l'unité de commutation et de conférence (SWAC) est en mesure d'effectuer des commutations de conférence entre un nombre théoriquement illimité de participants de sorte que chaque participant a accès aux signaux envoyés par les autres participants, à l'exception des signaux délivrés par les terminaux eux-mêmes qui sont filtrés par le filtre de conférence respectif (2).

2. Système de communication selon la revendication 1,
**caractérisé en ce que**
- dans chaque adaptateur de terminal (TA), il est prévu au moins un convertisseur A/N et/ou N/A pour coder les signaux analogiques des terminaux dans le PCM et pour le décodage de PCM en signaux analogiques pour les terminaux (T1 ..), et / ou en particulier
- chaque noeud (KNK1, KNK2 ...) présente plusieurs interfaces d'utilisateur (UIOE1.1, UI OE1.2, ...), auxquelles sont reliés respectivement un nombre d'adaptateurs de terminal (TA), en particulier huit adaptateurs de terminal (TA) par l'intermédiaire du standard E1 par fibres optiques ou fils de cuivre, et/ou en particulier,
- au sein d'un noeud (KNK1, KNK2), les données sont transportées par un bus interne de noeud, en particulier un bus H.110 , cependant dans le même format E1 que la communication entre les adaptateurs de terminal (TA) et les interfaces d'utilisateur (UIOE), et en particulier, l'unité de commutation et de conférence (SWAC) classe chronologiquement les signaux provenant des signaux des TA dans les intervalles de temps de l'autre bus interne plus rapide du noeud.

3. Système de communication selon l'une des revendications précédentes,
**caractérisé en ce que**
- le réseau de communication (CN) entre les noeuds (KNK) se compose d'autoroutes de données à modulation temporelle (Highways TDM) au format ATM, et/ou particulier
- le gestionnaire d'interface réseau (NIM) convertit les données au format E1 entre autres au format ATM, et / ou en particulier
- l'unité de commutation et de conférence (SWAC) est en mesure de transmettre les paquets de données entre les noeuds en parallèle sur un maximum de 13 canaux à 64 kHz.

4. Système de communication selon l'une quelconque des revendications précédentes,
**caractérisé en ce que**
- le convertisseur A/N (A/N) balaye à 48 kHz des signaux audio analogiques à large bande et code à 16 bits en 12 intervalles de temps TDM chacun de 64 kbps pour le transport sur le réseau, et le convertisseur N/A 12 correspondant reconvertit des intervalles de temps TDM reçus en signaux audio large bande correspondants et/ou en particulier
- le convertisseur A/N (A/N) est en mesure de diviser un signal numérique sériel, ainsi que les signaux de commande associés par balayage à haute résolution en petites unités de données et le convertisseur N/A sur le terminal de réception (T) est en mesure de reconstituer le signal numérique sériel d'origine à partir de ces petites unités de données.

5. Système de communication selon l'une des revendications précédentes,
**caractérisé en ce que**
le convertisseur A/N (AD) balaye à haute résolution un signal numérique sériel et le code en plusieurs intervalles de temps parallèles TDM à un bit par point de balayage.

6. Système de communication selon l'une des revendications précédentes,
**caractérisé en ce que**
- dans le serveur (1), les règles d'expiration des contrôles d'accès (NIM) dans chaque noeud (KNK) et/ou la répartition des tâches dans chaque noeud (KNK) sont générées dans l'unité centrale de traitement (CPU) présente dans chaque noeud et sont déposées ainsi dans chaque noeud (KNK) du réseau (KN et/ou en particulier
- plusieurs adaptateurs de terminal (TA), en particulier de 2 x 8 adaptateurs de terminal (TA) sont logés dans une unité d'adaptateurs de terminal (TAU) et/ou en particulier
- chaque terminal (T) adapté pour transmettre et recevoir n'est relié qu'au moyen d'un adaptateur de terminal (TA) et que celui-ci est relié à un ou deux noeuds de réseau (KNK) pour des raisons de redondance.

7. Système de communication selon l'une quelconque des revendications précédentes,
**caractérisé en ce qu'**
- un adaptateur de terminal (TA) peut être relié à plusieurs terminaux vocaux monocanal (T), et/ou en particulier
- les noeuds (KNK) disposent d'interfaces Ethernet supplémentaires, en particulier d'interfaces Ethernet 100/1000 Mb, notamment l'intégration de services IP.

8. Système de communication selon l'une quelconque des revendications précédentes,
**caractérisé en ce que**
- les adaptateurs de terminal (TA) disposent de interfaces unitaires selon le E1 standard pour se connecter au noeud du réseau (KNK) et en particulier, comprenant en plus une interface unitaire Ethernet et/ou en particulier
- l'adaptateur de terminal (TA) est intégré dans des terminaux (T), qui servent uniquement de combinés.

9. Système de communication selon l'une quelconque des revendications précédentes,
**caractérisé en ce qu'**
il est prévu des adaptateurs de terminal séparé (TA) dans différentes variantes, particulièrement en tant que
- radio TA pour le raccordement de terminaux en privilégiant la transmission audio,
- données TA pour le raccordement de terminaux en privilégiant la transmission de données, et
- voix TA pour le raccordement de terminaux en privilégiant l'audio et la voix.

10. Système de communication selon l'une quelconque des revendications précédentes,
**caractérisé en ce que**
- le réseau de communication (KN) est réalisé en double de façon redondante, en particulier par des lignes physiquement doubles, et chaque noeud (KNK) est raccordé les deux lignes (RL1, RL2) à au moins deux autres noeuds, et/ou en particulier,
- la ligne du réseau de communication (KN) est une ligne de sonnerie entre les noeuds (KNK), une boucle (RL1, RL2), et/ou particulier
- tous les adaptateurs de terminal (TAs) et/ou tous les noeuds (KNK) sont reliés aux autres éléments respectifs numériques ainsi que sont interconnectés par élément parallèlement au réseau de communication (KN) par un réseau local, en particulier selon le standard Ethernet, en particulier que pour la transmission de données de commande.

11. Système de communication selon l'une quelconque des revendications précédentes,
**caractérisé en ce qu'**
- au moins certains terminaux (T1, T2, ...), en particulier, les terminaux audio de commande vocale (VCT), sont librement configurables en tant que poste vocal du système selon leurs éléments fonctionnels et en particulier disposent d'un écran tactile (3) qui peut représenter les éléments fonctionnels librement configurables et que, dans le réseau de communication (CN), et **en ce que** dans le réseau de communication (KN), en particulier dans son serveur (1), des profils d'utilisateur sont déposés lesquels contiennent une configuration définie, spécifique à l'utilisateur en particulier de tous les terminaux (T) existants, et/ou en particulier
- au moins dans le réseau de communication, donc à savoir sur les autoroutes de données TDM, ainsi que dans les noeuds (KNK), en particulier également dans les lignes en étoile (SL) entre les adaptateurs de terminal (TA) et les noeuds (KNK), ainsi que dans les adaptateurs de terminal (TA's), il est prévu une séparation stricte de chemins de données (r) rouges liés à la sécurité et les chemins de données noirs non liés à la sécurité qui s'étendent en particulier sur la même ligne physique et ne sont séparés que temporellement, et/ou en particulier,
- des chemins de données rouges (r) et noirs (s) sont séparés lors du procédé de multiplexage par répartition dans le temps en cas d'utilisation des mêmes lignes physiques (Lr, Ls) par des intervalles de temps délimités fixement les uns des autres.

12. Procédé de fonctionnement d'un système de communication comprenant
- un réseau de communication de type ATM (KN) pour la transmission de données numériques,
- dans lequel plusieurs noeuds de réseau de communication (KNK) sont disposés en tant qu'accès au réseau de communication (KN),
- dont au moins un est connecté à un serveur de réseau de communication (1), et
- des adaptateurs de terminal (TA) pour la connexion de terminaux (T) au réseau de communication (KN) par l'intermédiaire de ses noeuds (KNK), et
- au moins un convertisseur analogique/numérique (A/N) pour convertir des signaux analogiques en signaux numériques,
- des signaux analogiques à large bande, étant numérisés en particulier de 0 kHz à 22 kHz et/ou dans une plage dynamique de maximal 80 dB,
**caractérisé en ce qu'**
- il est possible d'effectuer entre plus de deux terminaux (T) des commutations de conférence, dans lesquels chaque participant peut émettre et recevoir et que chaque participant reçoit les signaux de tous les participants, **en ce que** les signaux envoyés par lui-même ne lui sont cependant plus fournis, en particulier sont filtrés par le filtre de conférence (2) qui lui est associé.

13. Procédé selon la revendication 12,
**caractérisé en ce que**
dans chaque adaptateur de terminal (TA), il est prévu au moins un convertisseur A/N et/ou N/A pour coder les signaux analogiques des terminaux dans le PCM et pour le décodage de PCM en signaux analogiques pour les terminaux (T1 ..), et / ou en particulier
- l'unité de commutation et de conférence (SWAC) transmet les cellules de données numérisées entre les noeuds en parallèle sur un maximum de 13 canaux à 64 kHz chaque.

14. Procédé selon l'une des revendications de procédé précédentes,
**caractérisé en ce que**
- chaque noeud (KNK) présente plusieurs interfaces d'utilisateurs (UIOE1.1, UI OE1.2, ...), auxquelles sont reliés respectivement un nombre d'adaptateurs de terminal (TA), en particulier huit adaptateurs de terminal (TA) par l'intermédiaire du standard E1 par fibres optiques ou fils de cuivre, et/ou en particulier,
- des données numériques sérielles (par ex. des données informatiques) émises depuis un terminal (T) et arrivant dans l'adaptateur de terminal (TA1) ainsi que les signaux de commande associés, sont divisés en petites unités de données, sont transmises via le réseau de communication (KN) et sont reconstitués dans l'adaptateur de terminal d'émission (TA2) en signal numérique sériel d'origine sans décalage temporel inadmissible des unités de données.

15. Procédé selon l'une des revendications de procédé précédentes,
**caractérisé en ce que**
- le convertisseur A/N (A/N) démantèlent les données numériques sérielles par balayage à haute résolution en petites unités de données et classe les unités de données générées en plusieurs intervalles de temps TDM parallèles et/ou en particulier
- les canaux individuels sont partagés en intervalles de temps selon le procédé de multiplexage par répartition dans le temps (TDM).

16. Procédé selon l'une des revendications de procédé précédentes,
**caractérisé en ce que**
- dans des commutations de conférence, chaque participant émet sur son propre canal sous forme d'un intervalle de temps et reçoit sur un autre canal en particulier des intervalles de temps (Timeslot), les canaux étant mélangés ou séparés dans l'unité de commutation et de conférence (SWAC).

17. Procédé selon l'une des revendications de procédé précédentes,
**caractérisé en ce que**
- les données rouges liées à la sécurité (r) et les données noirs non liées à la sécurité sont manipulées et transportées de manière strictement séparée en particulier par séparation stricte dans la plage de temps, et/ou en particulier
- lors de la connexion d'un utilisateur à un terminal (T), le terminal reçoit un profil d'utilisateur déposé dans le serveur (1) du réseau de communication (KN) au moyen duquel le terminal de configuration neutre (T) est configuré en fonction de ses unités d'entrée et de sortie de manière spécifique à l'utilisateur, en particulier les éléments d'entrée et de sortie spécifiques à l'utilisateur étant affichés sur son écran tactile (3)
- le serveur (1) du réseau de communication (KN) étant relié à moins deux noeuds (KNK) et en cas d'interruption de la connexion principale à un premier noeud, le serveur (1) commute automatiquement à un autre noeud (KNK) sur l'une des connexions parallèles.

18. Procédé selon l'une des revendications de procédé précédentes,
**caractérisé en ce que**
- les filtres rouge/noir (F-r/s) sont protégés en permanence contre toute modification par division de données noires (s) et rouges (r) transmises sur la même ligne dans des intervalles de temps en chemins de données séparés noirs et rouges (Lr, Ls) dans le fait que les filtres (F-r/s) sont caractérisés constamment par différents codes de filtrage qui sont déposés dans la mémoire EPROM du filtre, ne peuvent pas être modifiés et sont activés par la sélection du code, en cas de présentation répétée d'une valeur de code erronée, le filtre étant désactivé, une alarme avec un message d'erreur émise sur le noeud correspondant et sur le serveur, le service du noeud (KNK) étant alors interrompu jusqu'à validation manuelle de l'alarme sur le noeud (KNK) et/ou en particulier
- dans le cas d'une ligne d'appel (RL1, RL2) interrompue en deux endroits du réseau de communication (KNK), les unités de commande (CPU) des noeuds (K NK) et/ou le serveur (1) du réseau de communication (KN) continuent de gérer automatiquement les parties séparées du réseau de communication comme des réseaux partiels séparés (KNK1, KNK2).
